# EUROPEAN PATENT SPECIFICATION

(11) **EP 0 785 244 B1**
(45) Date of publication and mention of the grant of the patent: **26.06.2002**
(21) Application number: 96100855.4
(22) Date of filing: 22.01.1996
(51) Int. Cl.: C09J 7/02

(54) **Easy-peeling tearable safety tape roll for packing, sealing or protection**
Leicht abziebares reissbares Sicherheitsband für Verpackung, Versiegelung oder Schutz
Rouleau de ruban adhésif aisément pelable et déchirable, pour l'emballage, le scellement ou la protection

(43) Date of publication of application: 23.07.1997
(73) Proprietor: Kao, Cheng-Kang, Taipei (TW)
(72) Inventor: Kao, Cheng-Kang, Taipei (TW)
(74) Representative: Reinhard - Skuhra - Weise & Partner

(56) References cited:
- GB-A- 922 350
- US-A- 3 143 208
- US-A- 4 581 087
- US-A- 4 647 485
- US-A- 5 366 775

## Description

### BACKGROUND OF THE INVENTION

The present invention relates to tape rolls for packing, sealing, or protection purposes, and relates more particularly to such a tape roll which can be easily torn apart at any selected length without the use of any tape dispensing means or cutting means, and easily peeled off without producing annoying noise, and which permits the starting end of the cut tape to be quickly relocated.

Tape rolls have become indispensable in offices and factories and places of the like in daily operation for packing or fixing. They can also be used to seal letters on an envelop, carton, etc. against moisture. The conventional tape rolls are made by first coating the surface of a continuous plastic film with adhesive and then rolling the same up into rolls. The plastic film used in the prior art tape rolls is made of bi-oriented polypropylene (BOPP) film. Such bi-oriented film can be made relatively thin, and transparent sealing tape with improved tensile strength, and will be prevalent in consumers' markets in the future. The strength of this kind of sealing tape is so good that the tearing apart of the tape with bare hands is hardly possible, so a cutting blade or a mount with a cutting knife has to be used to cut off the sealing tape repeatedly in practical operation. This makes the use of a sealing tape inconvenient and unsafe. Because the coating of adhesive has strong adhesion power, the user needs to apply much effort in order to peel off the sealing tape, and much noise will be produced when peeling off the sealing tape. Furthermore, because the strong adhesion power of the coating of adhesive, when the tape is cut, the starting end of the cut tape cannot be peeled off completely.

There are various easy-peeling sealing tapes available in the market. U.S. Pat. No. 5,366,775 discloses an easy-peeling and easy-dispensing safety tape roll for packing or sealing which is made from a thin plastic film with one side thereof coated with adhesive and the opposite side thereof coated with a release agent so as to permit the tape to be easily peeled off when dispensing same and to facilitate the relocation of a starting end of the cut tape roll in nest use, wherein the adhesive is present in a discontinuous layer whereby the middle of the lateral span of the side coated with adhesive is provided with a continuous strip-like area to which no adhesive is applied, which continuous strip-like area is provided with a plurality of spaced punch holes so as to permit the tape to be easily torn apart at any selected position. Because adhesive is discontinuously covered over the thin plastic film, the fabrication process is relatively complicated, and the formation of the punch holes in the continuous strip-like area requires a precision processing equipment to achieve. Furthermore, the tape around the non-adhesive area tends to drop from the object to which the tape is applied.

### SUMMARY OF THE INVENTION

The present invention has been accomplished to provide an easy-peeling and easy-dispensing safety tape roll for packing, sealing or protection which eliminates the aforesaid drawbacks. It is therefore one object of the present invention to provide an easy-peeling and easy-dispensing safety tape roll for packing, sealing or protection which can be easily torn apart by hand at any selected length without the use of any cutting means. It is another object of the present invention to provide an easy-peeling and easy-dispensing safety tape roll for packing, sealing or protection which can be easily peeled off without producing annoying noise. It is still another object of the present invention to provide an easy-peeling and easy-dispensing safety tape roll for packing, sealing or protection which permits the starting end of the cut tape to be quickly relocated.

According to the invention there is provided :
a) A safety tape roll for packaging, sealing or protection purposes, comprising:
   a thin plastic film (41, 51, 71)
   one side of said film (41, 51, 71) being continously coated with a layer of an adhesive (42, 52, 72) of strong power,
   the opposite side of said film (41, 51, 71) being coated with a layer (43, 53, 73) consisting of a release agent, and
   a plurality of spaced cuts (44, 54, 74) provided in said film (41, 51, 71) at selected lengths and not going through said film (41, 51, 71),
   wherein the cuts (44, 54, 74) are covered by the layer of release agent (43, 73) or the layer of adhesive (52).
and b) a tape roll as defined above, wherein the cuts are transversal V-grooves(44, 54).

### BRIEF DESCRIPTION OF THE DRAWINGS

Fig. 1 shows an easy-peeling easy-dispensing safety tape roll according to a second embodiment of the present invention;
Fig. 1A is an enlarged view of a part of Figure 2;
Fig. 2 shows an easy-peeling easy-dispensing safety tape roll according to a third embodiment of the present invention;
Fig. 2A is an enlarged view of a part of Figure 3;
Fig. 3 shows spaced cuts that are not made through the continuous film.
Fig. 3A is an enlarged view of a part of Figure 5.

### DETAILED DESCRIPTION OF THE PREFERRED EMBODIMENT

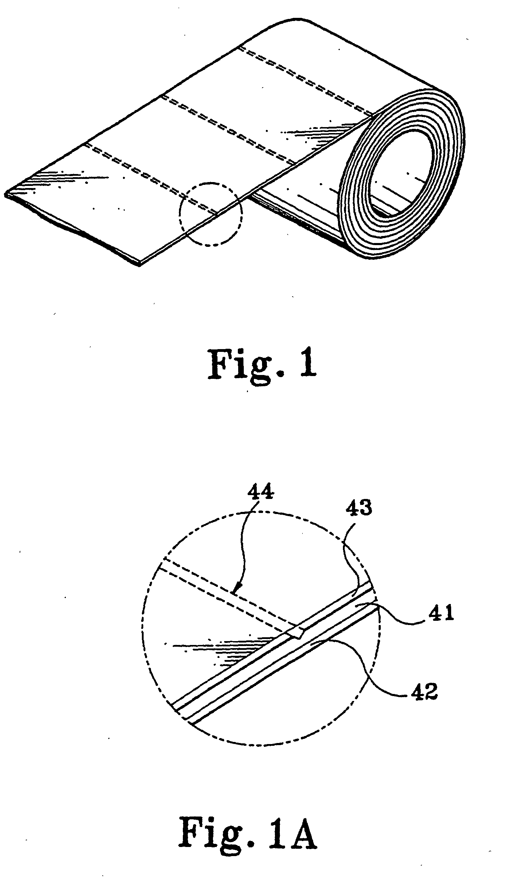

Figures 1 and 1A show an alternate form of the present invention, in which the tape roll is made from a continuous film 41 with one side thereof coated with a layer of adhesive 42 and an opposite side thereof coated with a release agent 43 so as to permit the tape to be easily peeled off when dispensing same; a plurality of transverse V-grooves 44 are made on the continuous film 41 at the side coated with the release agent 43 for permitting the tape to be easily torn apart at any selected length.

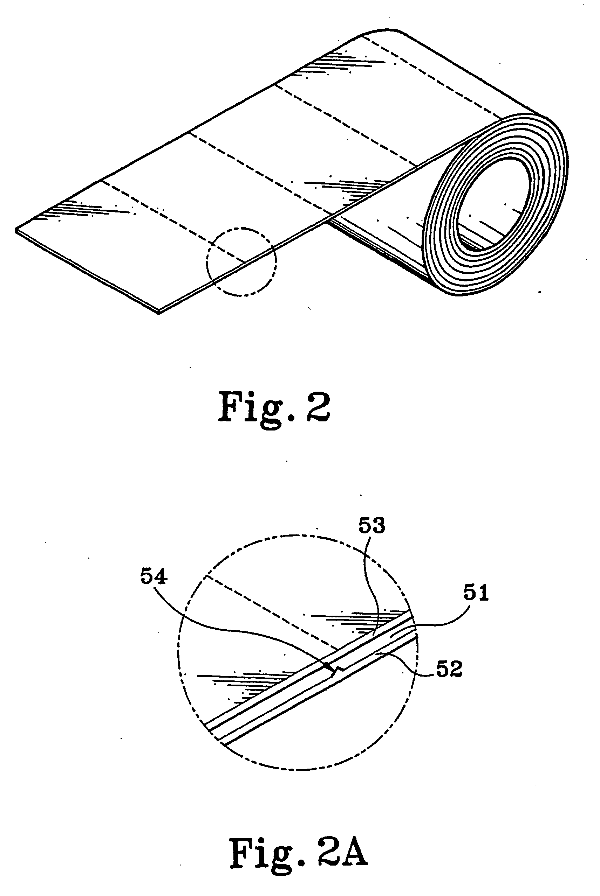

Figures 2 and 2A show another alternate form of the present invention, in which the tape roll is made from a continuous film 51 with one side thereof coated with a layer of adhesive 52 and an opposite side thereof coated with a release agent 53 so as to permit the tape to be easily peeled off when dispensing same; a plurality of transverse V-grooves 44 are made on the continuous film 51 at the side coated with adhesive 52 for permitting the tape to be easily torn apart at any selected length.

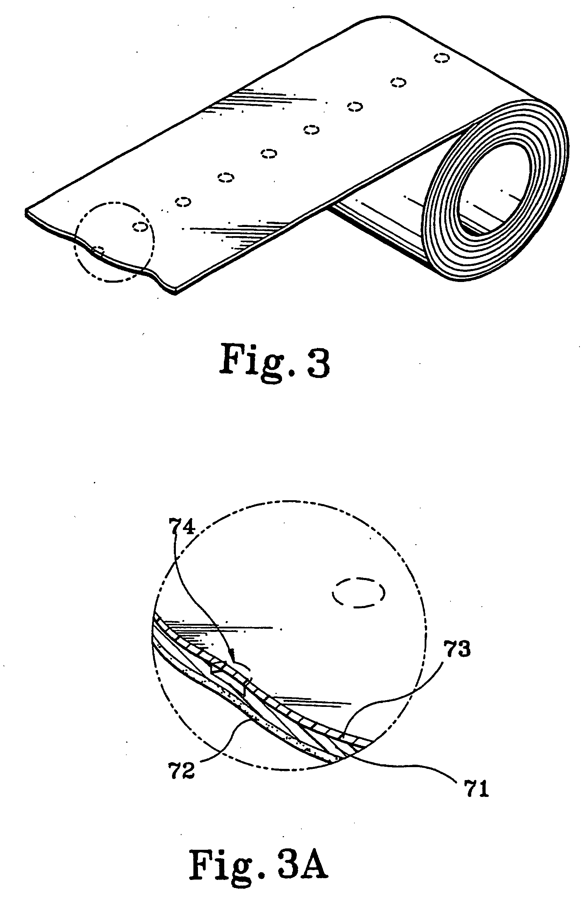

In Fig. 3 and 3A, the spaced cuts 74 of 3, 3A are not made through the continuous film 71, and both sides of the cuts 74 are coated with a layer of adhesive 72 and a release agent 73.

As the back side of the tape roll is coated with a layer of release agent, the rolled up tape with the adhesive coated side in close abutment against the back side can be easily and smoothly peeled off in dispensing without producing any annoying noise as a result of the effective reduction of vibration and tension of the dispensed tape in outward extension. Because the front side of the continuous film of the tape roll of either of the aforesaid embodiments is coated with a layer of adhesive which when adhered to the object is firmly secured in place, so that the tape roll can be easily torn apart by shearing force produced at the cuts when the tape roll is stretched by hand. Moreover, the starting end of the cut tape roll of the present invention can be easily relocated in use for dispensing due to the provision of the cuts.

Furthermore, the continuous film of the tape roll according to any of the aforesaid embodiments of the present invention can be made from bi-oriented polypropylene, polyester film, or any of a variety of suitable plastic film materials.

## Claims

1. A safety tape roll for packaging, sealing or protection purposes, comprising:
a thin plastic film (41, 51, 71)
one side of said film (41, 51, 71) being continously coated with a layer of an adhesive (42, 52, 72) of strong power,
the opposite side of said film (41, 51, 71) being coated with a layer (43, 53, 73) consisting of a release agent, and
a plurality of spaced cuts (44, 54, 74) provided in said film (41, 51, 71) at selected lengths and not going through said film (41, 51, 71),
wherein the cuts (44, 54, 74) are covered by the layer of release agent (43, 73) or the layer of adhesive (52).

2. Tape roll according to claim 1, wherein the cuts are transversal V-grooves (44, 54).

## Patentansprüche

1. Sicherheitsbandrolle für Verpackungs-, Dichtungs-, oder Schutzzwecke, aufweisend:
Einen dünnen Kunststofffilm (41, 51, 71),
wobei eine Seite des Films (41, 51, 71) mit einer starkklebenden Klebstoffschicht (42, 52, 72) kontinuierlich beschichtet ist,
wobei die gegenüberliegende Seite des Films (41, 51, 71) mit einer aus einem Ablösemittel bestehenden Schicht (43, 53, 73) beschichtet ist, und
eine Mehrzahl von beabstandeten Einschnitten (44, 54, 74) die in dem Film (41, 51, 71) mit gewählten Längen vorgesehen sind und den Film (41, 51, 71) nicht durchsetzen.

2. Bandrolle nach Anspruch 1, wobei die Einschnitte quer verlaufende V-Rillen (44, 54) sind.

## Revendications

1. Bobine de ruban à securité, destinée pour emballage, étanchement ou protection, comprenant,
un film synthétique fin (41, 51, 71),
une face du film (41, 51, 71) étant revêtu, en continue avec une couche d'un adhesif fort (42, 52, 72),
la face opposée du film (41, 51, 71) étant revêtue avec une couche (43, 53, 73) consistant d'un moyen de séparation et plusieurs incisions écartées (44, 54, 74) prévues dans le film (41, 51, 71) à longueurs sélectées et ne pas traversant le film (41, 51, 71).

2. Bobine de ruban selon revendication 1, dans laquelle les incisions sont des gorges transversales en form de V (44, 54).
